# EUROPEAN PATENT SPECIFICATION

(11) **EP 1 970 547 B1**
(45) Date of publication and mention of the grant of the patent: **14.10.2009**
(21) Application number: 08004733.5
(22) Date of filing: 13.03.2008
(51) Int. Cl.: F01N 3/30, B01D 53/94, F01N 3/20

(54) **Exhaust gas purifying system for an internal-combustion engine**
Abgasreinigungssystem für einen Verbrennungsmotor
Système de purification de gaz d'échappement pour moteur à combustion interne

(30) Priority: 13.03.2007 JP 2007064179; 13.03.2007 JP 2007064178
(43) Date of publication of application: 17.09.2008
(73) Proprietor: Yamaha Hatsudoki Kabushiki Kaisha, Iwata-shi, Shizuoka-ken 438-8501 (JP)
(72) Inventor: Nishimura, Hidehiro, Iwata-shi Shizuoka-ken 438-8501 (JP); Takii, Osamu, Iwata-shi Shizuoka-ken 438-8501 (JP)
(74) Representative: Grünecker, Kinkeldey, Stockmair & Schwanhäusser Anwaltssozietät

(56) References cited:
- EP-A- 0 773 354
- WO-A-20/04079170
- US-A- 3 810 361
- US-A- 3 872 213

## Description

The present invention relates to an exhaust gas purifying system for an internal-combustion engine installed in a motorcycle, for example.

Prior art document US 3,810,361 teaches an exhaust system having first to third reactors provided within an exhaust conduit means. Said exhaust conduit means is provided with an upstream exhaust pipe being connected with an engine, wherein a valve is provided to split up the exhaust gas into a first duct and a second duct. Within said first duct, a first catalytic reactor is arranged, while the second duct serves as a bypass duct concerning said first catalytic reactor. Downstream of said first catalytic reactor, said ducts are merged so that exhaust gas is routed into a second catalytic reactor. Further downstream of said second catalytic reactor a secondary air inlet is provided for supplying air to the exhaust gas upstream of the third reactor, which is arranged further downstream thereof. Said first reactor serves to catalyze the conversion of NOx to ammonia, while the second reactor catalyzes reaction between NOx of the exhaust gas routed through the bypass conduit and the ammonia within the already treated exhaust coming from the first reactor. The treated exhaust gas flowing out from the second reactor is mixed with air and routed through the third reactor to catalyze oxidation of any unburned hydrocarbons and carbon monoxide, in order to finish the exhaust gas treatment. According to said prior art device, a first specific type of reactor for NOx reduction is provided for producing ammonia, while a second type of reactor is provided which further reduces NOx by using non-treated exhaust gas in combination with the already treated exhaust gas containing the ammonia. For oxidization of any unburned hydrocarbons or carbon monoxide a third type of reactor is provided to carry out said oxidization. For proper exhaust gas treatment each of the reactors needs to be put in its specific operation condition, especially the specific operation temperature. Hence, respective sufficient exhaust gas treated performance can be achieved only after the entire system is brought into stable and sufficient operating condition.

Prior art document WO 2004/079170 A1 teaches an exhaust system for an internal combustion engine having a particulate filter and a NOx absorber constituted by a first NOx absorbent disposed upstream of the filter and a second NOx absorbent disposed downstream of the filter. For controlling exhaust gas treatment, additional fuel can be injected upstream of the first NOx absorbent, upstream of the particulate filter and upstream of the second NOx absorbent. In addition thereto, air can be also injected upstream of the second NOx absorbent. Even if said prior art document teaches specific exhaust gas treatment in consideration of temperature levels within the exhaust gas system, no hint can be taken from said document to provide a first reduction catalyzer as a preheating catalyzer for quickly activating the respective second and third catalyzers. Moreover, said further prior art document is focused on a particulate filter arranged between the NOx absorbent and does not refer to a third catalyzer like that of the present invention. Hence, said further prior art document cannot give any additional hint in view of the subject matter of the present invention.

Normally, exhaust gas from an engine, which is an internal-combustion engine installed in a motorcycle and so forth, is emitted into the air. However, it is preferable that exhaust gas is purified as much as possible before emission of the exhaust gas. Therefore, conventionally, a catalyzer is provided in a midway of an exhaust conduit, through which exhaust gas from the engine is discharged, and thereby the purification is facilitated by the catalyzer.

A system described in the following is known as a conventional exhaust gas purifying system for purifying exhaust gas with the catalyzer (for example, see Patent Document 1).

That is, in the conventional exhaust gas purifying system, first, second, and third catalyzers are disposed one after another in midway parts of the exhaust conduit from an upstream toward a downstream of the exhaust conduit. Also, a first secondary air introducing conduit is connected to a midway part of the exhaust conduit in a position between the engine and the first catalyzer. A second secondary air introducing conduit branched from a midway part of the first secondary air introducing conduit via a switch valve is connected to a midway part of the exhaust conduit in a position between the second and the third catalyzers.

In addition, when the first secondary air introducing conduit is communicatively connected with the exhaust conduit by a signal output from a controller to the switch valve, the first, second and third catalyzers purify (facilitate oxidization of) CO and HC. When the second secondary air introducing conduit is communicatively connected with the exhaust conduit by a signal output from the controller to the switch valve, NOₓ is reduced at the first and second catalyzers, and CO and HC are oxidized at the third catalyzer.
Patent Document 1: JP-A-Hei 5-321653

In the conventional technique, when the second secondary air introducing conduit is communicatively connected with the exhaust conduit by the signal output from the controller to the switch valve, NOₓ contained in exhaust gas is reduced at the first and the second catalyzers, and CO and HC contained in exhaust gas are oxidized at the third catalyzer.

However, the first and second catalyzers according to the conventional technique are not formed in consideration of appropriate materials for reducing NOₓ. The third catalyzer is not formed in consideration of an appropriate material for oxidizing CO and HC, either. Therefore, there is a problem that those three catalyzers cannot necessarily sufficiently purify NOₓ, CO, or HC.

Further, when the first secondary air introducing conduit is communicatively connected with the exhaust conduit by the signal output from the controller to the switch valve, the three catalyzers (the first, second, and third catalyzers) are used for oxidization of CO and HC contained in exhaust gas. Therefore, there is a problem that NOₓ contained in exhaust gas cannot be sufficiently reduced.

It is an object of the present invention to provide an exhaust gas purifying system for an internal combustion engine as indicated above having high exhaust gas treating performance even if several catalyzers are used.

According to the present invention, said objective is solved by an exhaust gas purifying system for an internal-combustion engine having the features of independent claim 1. Preferred embodiments are laid down in the dependent claims.

Accordingly, it is provided an exhaust gas purifying system for an internal-combustion engine, in which both reduction of NO_{X} and oxidization of CO and HC contained in exhaust gas can be effectively made by use of three catalyzers.

It is provided an exhaust gas purifying system for an internal-combustion engine, comprising: an exhaust conduit connectable to an exhaust port of the internal-combustion engine for discharging exhaust gas; a first catalyzer provided in a midway part of the exhaust conduit for purifying the exhaust gas; a second catalyzer provided in a midway part of the exhaust conduit more downstream than the first catalyzer for purifying exhaust gas flowed out from the first catalyzer; a third catalyzer provided in a midway part of the exhaust conduit more downstream than the second catalyzer for purifying exhaust gas flowed out from the second catalyzer; a secondary air introducing conduit provided in the exhaust conduit in a position between the second and the third catalyzers for introducing secondary air into the exhaust conduit.

Preferably, a further secondary air introducing conduit is provided in the exhaust conduit in a position between the first and the second catalyzers for introducing secondary air into the exhaust conduit.

Further, preferably the first catalyzer provided in a midway part of the exhaust conduit is configured for reducing at least NOₓ contained in the exhaust gas, and wherein the second catalyzer provided in a midway part of the exhaust conduit more downstream than the first catalyzer is configured for reducing at least NOₓ in exhaust gas components contained in exhaust gas flowed out from the first catalyzer.

Still further, preferably the third catalyzer provided in a midway part of the exhaust conduit more downstream than the second catalyzer is formed with a material different from the first and the second catalyzers and is configured for oxidizing at least CO and HC in exhaust gas components contained in exhaust gas flowed out from the second catalyzer.

Yet further still, preferably the secondary air introducing conduit provided in a position between the first and second catalyzers has a flow control valve for controlling a flow of secondary air introduced from the introducing conduit into the exhaust conduit.

In the following, the present invention is explained in greater detail with respect to several embodiments thereof in conjunction with the accompanying drawings, wherein:
- FIG. 1: is a general view of an exhaust gas purifying system for an internal-combustion engine according to a first embodiment,
- FIG. 2: is an enlarged view showing essential parts such as an exhaust conduit in FIG. 1 and first, second and third catalyzers,
- FIG. 3: is a view showing an exhaust conduit, first, second and third catalyzers, and so forth of an exhaust gas purifying system for an intemal-combustion engine according to a second embodiment,
- FIG. 4: is a view showing an exhaust conduit, first, second and third catalyzers, and so forth of an exhaust gas purifying system for an internal-combustion engine according to a third embodiment,
- FIG. 5: is a view showing an exhaust conduit, first, second and third catalyzers, and so forth of an exhaust gas purifying system for an internal-combustion engine according to a fourth embodiment,
- FIG. 6: is a view showing an exhaust conduit, first, second and third catalyzers, and so forth of an exhaust gas purifying system for an internal-combustion engine according to a fifth embodiment,
- FIG. 7: is a view showing an exhaust conduit, first, second and third catalyzers, and so forth of an exhaust gas purifying system for an internal-combustion engine according to a sixth embodiment,
- FIG. 8: is a view showing an exhaust conduit, first, second and third catalyzers, and so forth of an exhaust gas purifying system for an internal-combustion engine according to a seventh embodiment, and
- FIG. 9: is a view showing an exhaust conduit, first, second and third catalyzers, and so forth of an exhaust gas purifying system for an internal-combustion engine according to a variation example.

### Brief Description of Reference Numerals and Symbols:

1, 60, 90, 120, 230: exhaust gas purifying system
13, 210: reed valve
20, 20A: exhaust conduit
50, 50A: third catalyzer
40, 40A, 70, 100, 240: second catalyzer
30: first catalyzer
60, 80, 110, 190: secondary air introducing conduit
130, 160, 200, 250: other secondary air introducing conduit
140, 170, 220, 260: reed valve (flow control valve)

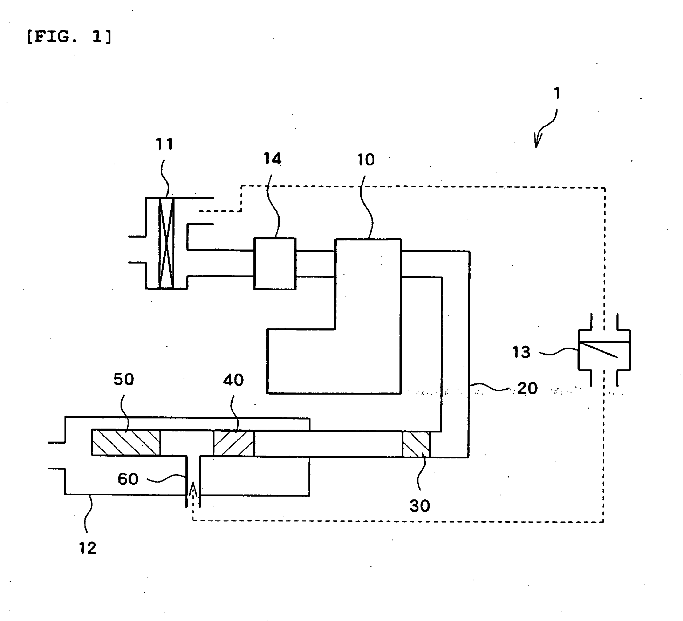

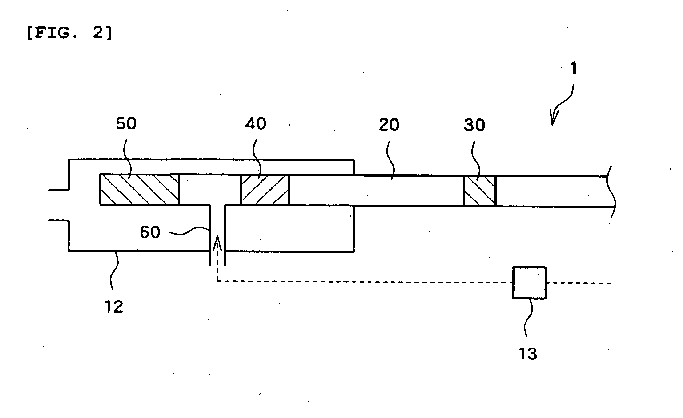

Descriptions will be made about the exhaust gas purifying system for an internal-combustion engine according to an embodiment of the present teaching with reference to FIGs. 1 and 2. An exhaust gas purifying system 1 for an intemal-combustion engine according to the embodiment of the present teaching is installed in a motorcycle, for example, and includes an engine 10, an exhaust conduit 20, a first catalyzer 30, a second catalyzer 40, a third catalyzer 50, and a secondary air introducing conduit 60.

The engine 10 is installed in a motorcycle, for example. In the engine 10, air from an air cleaner 11 and fuel from a fuel supply device 14 are mixed and supplied (injected) to a cylinder (not shown) in the engine 10. The fuel is combusted in the engine, and thereby a piston (not shown) in the engine 10 is driven (reciprocally moved). Further, an oxygen sensor (not shown) is attached on a part of the exhaust conduit 20 more downstream than an opening of the secondary air introducing conduit 60 and more upstream than the third catalyzer 50, or a part close to a downstream end of a silencer 12 described in the following. An output signal from the oxygen sensor is input to a controller (not shown). In the fuel supply device 14, a fuel amount supplied into the engine 10 is controlled based on the output signal from the oxygen sensor via the controller so that exhaust gas discharged from the exhaust conduit 20 is in the stoichiometric air-fuel ratio.

An upstream end of the exhaust conduit 20 is connected to the engine 10. The exhaust conduit 20 discharges exhaust gas of combusted mixture (fuel and air) in the engine 10. The exhaust gas contains exhaust substances such as NOₓ, CO and HC. The silencer 12 for reducing exhaust sounds in discharging exhaust gas outside is attached on a downstream end of the exhaust conduit 20.

The first catalyzer 30 is a reduction catalyzer, which holds a noble metal part having rhodium as its main component. The first catalyzer 30 is mounted on an upstream part in the exhaust conduit 20, for example, in an exhaust pipe. Further, the first catalyzer 30 mainly facilitates reduction of NOₓ contained in exhaust gas flowing in the exhaust conduit 20.

The second catalyzer 40 is a reduction catalyzer, which holds a noble metal part having rhodium as its main component similarly to the first catalyzer 30. The second catalyzer 40 is mounted in the exhaust conduit 20 in a position more downstream than the first catalyzer 30 in the silencer 12. Further, the second catalyzer 40 mainly facilitates reduction of NOₓ contained in exhaust gas flowing in the exhaust conduit 20.

The third catalyzer 50 is an oxidization catalyzer, which holds a noble metal part having palladium as its main component, which is a material different from the first catalyzer 30 and the second catalyzer 40. The third catalyzer 50 is mounted in the exhaust conduit 20 in a position more downstream than the second catalyzer 40 in the silencer 12. The third catalyzer 50 mainly facilitates oxidization of CO and HC contained in exhaust gas flowing in the exhaust conduit 20.

An upstream end of the secondary air introducing conduit 60 is connected to the air cleaner 11. A downstream end of the secondary air introducing conduit 60 is connected to the exhaust conduit 20 in a position between the second catalyzer 40 and the third catalyzer 50 in the silencer 12. The secondary air introducing conduit 60 constantly supplies outside air from the air cleaner 11 via a reed valve 13 to the exhaust conduit 20 in a position between the second catalyzer 40 and the third catalyzer 50. Thereby, oxidization of CO and HC at the third catalyzer 50 is facilitated.

In this embodiment, since the secondary air introducing conduit 60 is connected to the exhaust conduit 20 in the position between the second catalyzer 40 and the third catalyzer 50, air supplied from the secondary air introducing conduit 60 to the exhaust conduit 20 is supplied to the third catalyzer 50. However, a part of the air reverses to an upstream of the exhaust conduit 20 and is also supplied to the second catalyzer 40. As a result, although a reducing reaction of NOₓ takes place at the second catalyzer 40, oxidizing reactions of CO and HC take place also. Consequently, NOₓ cannot be sufficiently reduced only by the second catalyzer 40.

Therefore, in this embodiment, the first catalyzer 30 is disposed in a part more upstream than the second catalyzer 40. Accordingly, the air flowing (reversing) upstream in the exhaust conduit 20 from the secondary air introducing conduit 60 can be blocked at the second catalyzer 40, thereby NOₓ can be reduced at the second catalyzer 40, and also NOₓ can be sufficiently reduced at the first catalyzer 30. Further, CO and HC contained in exhaust gas can be sufficiently oxidized by secondary air from the secondary air introducing conduit 60 at the third catalyzer 50.

Therefore, with this embodiment, both reduction of NOₓ and oxidization of CO and HC can be effectively made by use of the three catalyzers 30, 40 and 50. Thereby, performance, reliability, and so forth of the exhaust gas purifying system 1 can be enhanced.

In this embodiment, since the reduction catalyzer is separated into the two catalyzers 30 and 40, the first catalyzer 30 is quickly activated when the engine 10 is started and is still cold. Thereby, the other two catalyzers 40 and 50 are quickly activated also because of the activation of the catalyzer 30. That is, the first catalyzer 30 can function as "preheating" for quickly activating the other two catalyzers 40 and 50 besides its function as a reduction catalyzer for NOₓ. Thereby, reduction of NOₓ and oxidization of CO and HC start immediately after a start of the engine 10. As a result, purification of the three components of exhaust gas can be improved.

Further, since the reduction catalyzer is separated into two catalyzers 30 and 40, each of the catalyzers 30 and 40 can be made smaller. Therefore, such a construction can facilely meet arrangement requirements such as bank angle and appearance of the vehicle in the case that the first catalyzer 30 is disposed in the exhaust pipe.

It is preferable that the first catalyzer 30 should obtain a necessary volume not by enlarging it in the radial direction but by enlarging in the direction of the length. Such a construction can meet the arrangement requirements mentioned above, and also a temperature of exhaust gas flowing into the second and third catalyzers 40 and 50 can be effectively raised. Therefore, the catalyzers 30, 40, and 50 can be more quickly activated.

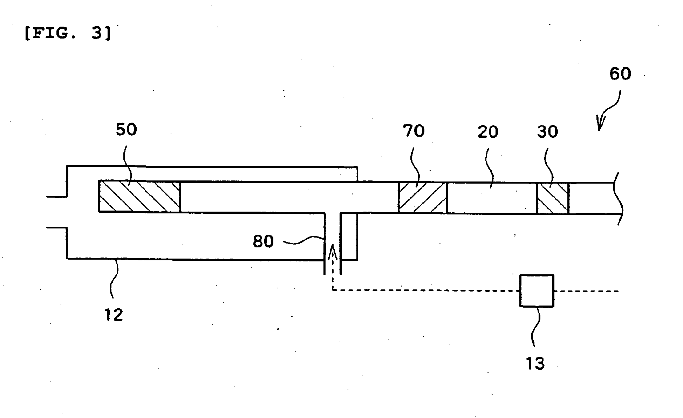

Next, FIG. 3 shows a second embodiment according to the present teaching. In this embodiment, the same reference numerals will be given to construction elements the same as the first embodiment, and descriptions about them will not be made.

The exhaust gas purifying system 60 for an internal-combustion engine according to this embodiment includes an engine (not shown), the exhaust conduit 20, the first catalyzer 30, a second catalyzer 70, the third catalyzer 50 and a secondary air introducing conduit 80.

The second catalyzer 70 mainly facilitates reduction of NOₓ contained in exhaust gas flowing in the exhaust conduit 20 similarly to the second catalyzer 40 described in the first embodiment. However, the second catalyzer 70 is different from the second catalyzer in the first embodiment in the respect that the catalyzer 70 is mounted in the exhaust conduit 20 in a part more upstream than the silencer 12. The secondary air introducing conduit 80 is connected to the exhaust conduit 20 in a position between the second catalyzer 70 and the third catalyzer 50.

With this embodiment with such a construction, Noₓ in addition to CO and HC, can be sufficiently purified by use of the three catalyzers 30, 70, and 50, and thus work and effect almost equivalent to the first embodiment can be realized.

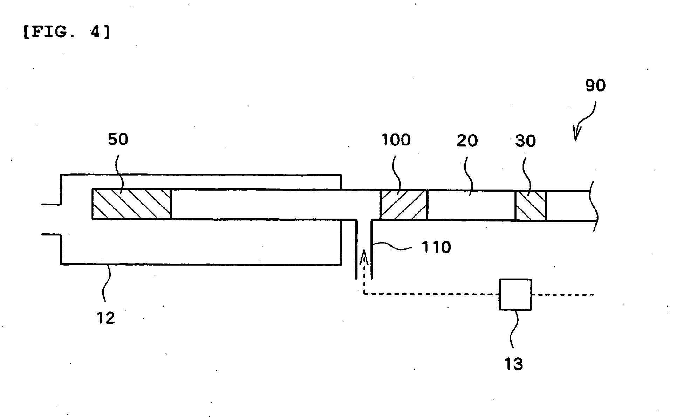

Next, FIG. 4 shows a third embodiment according to the present teaching. In this embodiment, the same reference numerals will be given to construction elements the same as the first embodiment, and descriptions about them will not be made.

An exhaust gas purifying system 90 for an internal-combustion engine according to this embodiment includes an engine (not shown), the exhaust conduit 20, the first catalyzer 30, a second catalyzer 100, the third catalyzer 50, and a secondary air introducing conduit 110.

The second catalyzer 100 mainly facilitates reduction of NOₓ contained in exhaust gas flowing in the exhaust conduit 20 similarly to the second catalyzer 40 described in the first embodiment. However, the second catalyzer 100 is different from the second catalyzer in the first embodiment in the respect that the catalyzer 100 is mounted in the exhaust conduit 20 in a part more upstream than the silencer 12.

The secondary air introducing conduit 110 is connected to the exhaust conduit 20 in a position between the second catalyzer 100 and the third catalyzer 50 similarly to the secondary air introducing conduit 60 according to the first embodiment. However, the secondary air introducing conduit 110 is different from the secondary air introducing conduit in the first embodiment in the respect that it is connected to the exhaust conduit 20 in a part more upstream than the silencer 12. Therefore, cold secondary air is directly supplied to the exhaust conduit 20 without being warmed at the silencer 12, and an oxygen concentration of secondary air can be made higher. Thereby, combustion efficiencies (oxidization efficiencies) of CO and HC at the third catalyzer 50 can be improved.

With this embodiment with such a construction, Noₓ in addition to CO and HC, can be sufficiently purified by use of the three catalyzers 30, 100, and 50, and thus work and effect almost equivalent to the first embodiment can be realized.

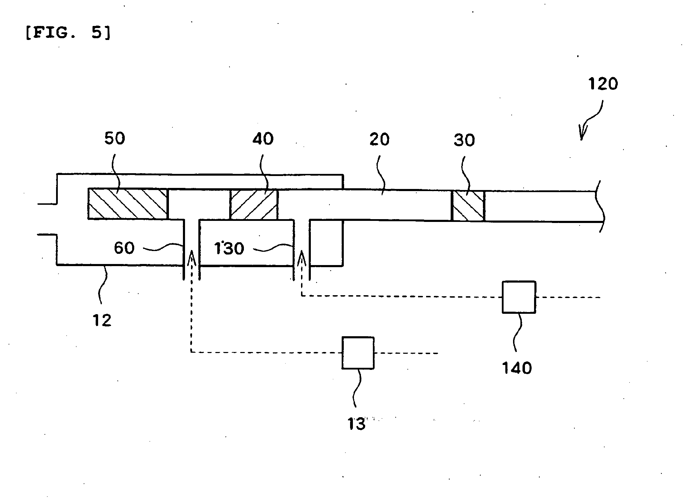

Next, FIG. 5 shows a fourth embodiment according to the present teaching. In this embodiment, the same reference numerals will be given to construction elements the same as the first embodiment, and descriptions about them will not be made.

An exhaust gas purifying system 120 for an internal-combustion engine according to this embodiment includes an engine (not shown), the exhaust conduit 20, the first catalyzer 30, the second catalyzer 40, the third catalyzer 50, and the secondary air introducing conduit 60, which is a first secondary air introducing conduit, similarly to the first embodiment.

However, the exhaust gas purifying system 120 according to this embodiment is different from the exhaust gas purifying system in the first embodiment in the respect that a downstream end of another secondary air introducing conduit 130 is connected to the exhaust conduit 20 in a position between the second catalyzer 40 and the third catalyzer 50 in the silencer 12.

A reed valve 140, which is a flow control valve electrically controlled to open or close corresponding to an output signal from a controller (not shown), is provided in a midway part of the second secondary air introducing conduit 130 so that exhaust gas flowing in the exhaust conduit 20 is in the stoichiometric air-fuel ratio.

Therefore, in the case of a setting that it is required to enhance reduction of NOₓ more than oxidization of CO and HC, the reed valve 140 is closed by the output signal from the controller, and thereby a flow of secondary air from the secondary air introducing conduit 130 into the exhaust conduit 20 is blocked. Accordingly, the second catalyzer 40 can be mainly used for reduction of NOₓ.

In the case of setting that it is required to enhance oxidization of CO and HC more than reduction of NOₓ, the reed valve 140 is opened by the output signal from the controller, and thereby secondary air from the secondary air introducing conduit 130 flows into the exhaust conduit 20. Accordingly, the second catalyzer 40 can be mainly used for oxidization of CO and HC. Further, in this case, secondary air can be introduced into the exhaust conduit 20 by use of the two secondary air introducing conduits 60 and 130, and thus a flow amount of the secondary air introduced into the exhaust conduit 20 can be increased. Therefore, CO and HC can be more effectively oxidized.

With this embodiment with such a construction, CO, HC, and NOₓ can be sufficiently purified by use of the three catalyzers 30, 40, and 50, and thus work and effect almost equivalent to the first embodiment can be realized.

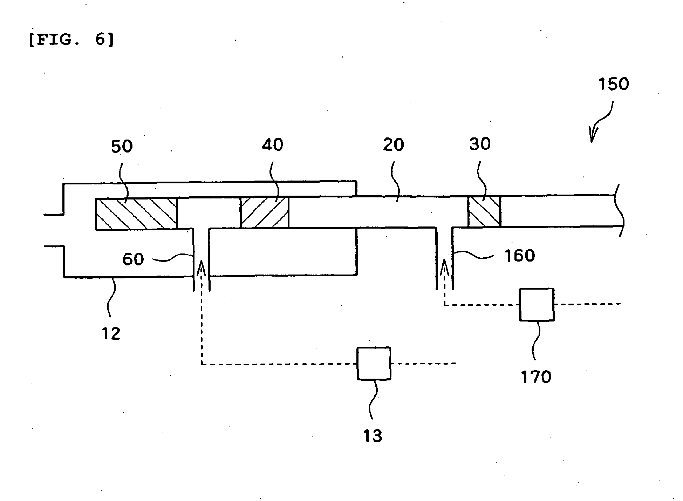

Next, FIG. 6 shows a fifth embodiment according to the present teaching. In this embodiment, the same reference numerals will be given to construction elements the same as the first embodiment, and descriptions about them will not be made.

An exhaust gas purifying system 150 for an internal combustion engine according to this embodiment includes an engine (not shown), the exhaust conduit 20, the first catalyzer 30, the second catalyzer 40, the third catalyzer 50, and the secondary air introducing conduit 60, which is a first secondary air introducing conduit, similarly to the first embodiment.

However, the exhaust gas purifying system 150 according to this embodiment is different from the exhaust gas purifying system in the first embodiment in the respect that a downstream end of another secondary air introducing conduit 160, which is a second secondary air introducing conduit, is connected to the exhaust conduit 20 in a position between the first catalyzer 30 and the second catalyzer 40 and more upstream than the silencer 12. Further, a reed valve 170, which is a flow control valve that opens or closes corresponding to an output signal from a controller (not shown), is provided in a midway part of the second secondary air introducing conduit 160 similarly to the fourth embodiment.

Work and effect almost equivalent to the fourth embodiment can be realized with this embodiment with such a construction.

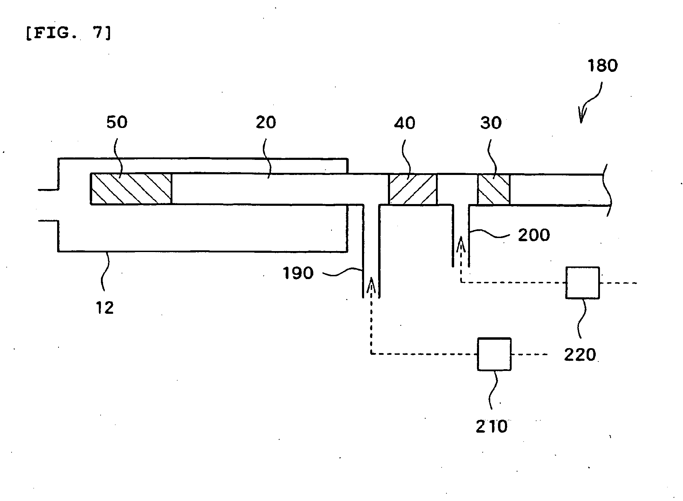

Next, FIG. 7 shows a sixth embodiment according to the present teaching. In this embodiment, the same reference numerals will be given to construction elements same as the first embodiment, and descriptions about them will not be made.

An exhaust gas purifying system 180 for an intemal-combustion engine according to this embodiment includes an engine (not shown), the exhaust conduit 20, the first catalyzer 30, the second catalyzer 40, the third catalyzer 50, a secondary air introducing conduit 190, which is a first secondary air introducing conduit, and another secondary air introducing conduit 200, which is a second secondary air introducing conduit.

The secondary air introducing conduit 190 is connected to the exhaust conduit 20 in a position between the second catalyzer 40 and the third catalyzer 50 and more upstream than the silencer 12. A reed valve 210 is connected to a midway part of the secondary air introducing conduit 190.

The secondary air introducing conduit 200 is connected to the exhaust conduit 20 in a position between the first catalyzer 30 and the second catalyzer 40. A reed valve 220, which is a flow control valve that opens or closes corresponding to an output signal from a controller (not shown), is provided in a midway part of the secondary air introducing conduit 200.

Work and effect almost equivalent to the fourth embodiment can be realized with this embodiment with such a construction.

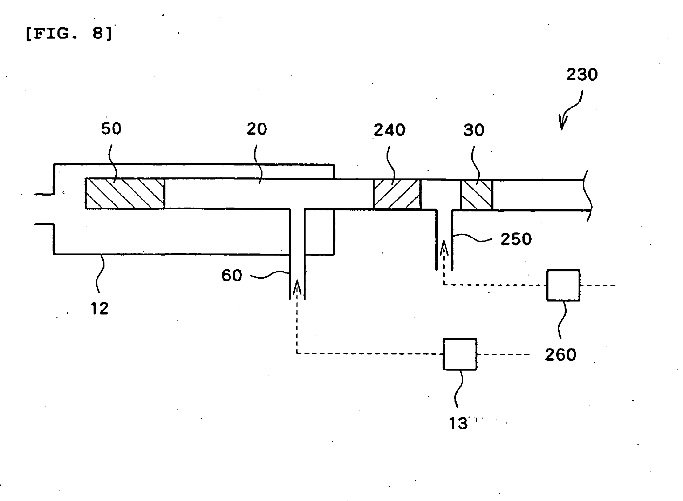

Next, FIG. 8 shows a seventh embodiment according to the present teaching. In this embodiment, the same reference numerals will be given to construction elements the same as the first embodiment, and descriptions about them will not be made.

An exhaust gas purifying system 230 for an internal-combustion engine according to this embodiment includes an engine (not shown), the exhaust conduit 20, the first catalyzer 30, a second catalyzer 240, the third catalyzer 50, the secondary air introducing conduit 60, which is a first secondary air introducing conduit, and another secondary air introducing conduit 250, which is a second secondary air introducing conduit.

The second catalyzer 240 is mounted in the exhaust conduit 20 in a position more upstream than the silencer 12. The secondary air introducing conduit 250 is connected to the exhaust conduit 20 in a position between the first catalyzer 30 and the second catalyzer 240. A reed valve 260, which is a flow control valve that opens or closes corresponding to an output signal from a controller (not shown), is provided in a midway part of the secondary air introducing conduit 250.

Work and effect almost equivalent to the fourth embodiment can be realized with this embodiment with such a construction.

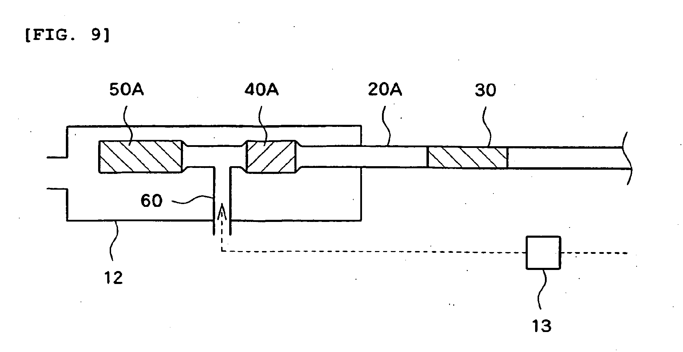

In the first embodiment, the descriptions are made with an example that a diameter of the exhaust conduit 20 is set same as the first catalyzer 30 and the second catalyzer 40. However, the present teaching is not limited to this case, but an exhaust conduit 20A can be formed to have a diameter smaller than a second catalyzer 40A and a third catalyzer 50A housed in the silencer 12 as in a variation example shown in FIG. 9.

In the fourth embodiment, the descriptions are made with an example that an open-close valve is used for allowing the flow of secondary air or blocking the flow. However, the present teaching is not limited to this case, but a regulating valve for variably regulating a flow amount of secondary air can be used, for example. This modification may be applicable to the fifth, the sixth, and the seventh embodiments also.

The description above discloses, according to a preferred embodiment, in order to solve the problems of the conventional technique, an exhaust gas purifying system for an internal-combustion engine, including: an exhaust conduit for discharging exhaust gas from an internal-combustion engine; a first catalyzer provided in a midway part of the exhaust conduit for reducing at least NOₓ contained in the exhaust gas; a second catalyzer provided in a midway part of the exhaust conduit more downstream than the first catalyzer for reducing at least NOₓ in exhaust gas components contained in exhaust gas flowed out from the first catalyzer; a third catalyzer provided in a midway part of the exhaust conduit more downstream than the second catalyzer and formed with a material different from the first and the second catalyzers for oxidizing at least CO and HC in exhaust gas components contained in exhaust gas flowed out from the second catalyzer; and a secondary air introducing conduit provided in the exhaust conduit in a position between the second and the third catalyzers for introducing secondary air into the exhaust conduit.

In the present embodiment with such a construction, the secondary air is introduced into the exhaust conduit in a position between the second catalyzer for reducing NOₓ in exhaust gas components contained in exhaust gas and the third catalyzer similarly for reducing NOₓ in the exhaust gas components. Therefore, NOₓ contained in exhaust gas from the internal-combustion engine can be certainly reduced by use of two catalyzers, which are the first and the second catalyzers, and also CO and HC can be certainly oxidized by the secondary air at the third catalyzer formed with a material different from the first and the second catalyzers.

In one preferred aspect of the present embodiment, the exhaust conduit can include another secondary air introducing conduit provided in a position between the first and the second catalyzers for introducing secondary air into the exhaust conduit. In the present embodiment with such a construction, CO and HC can be more effectively oxidized by secondary air introduced into the exhaust conduit by the other secondary air introducing conduit at the second and the third catalyzers.

In one preferred aspect of the present embodiment, the other secondary air introducing conduit has a flow control valve for controlling a flow of secondary air introduced from the introducing conduit into the exhaust conduit. In the present embodiment with such a construction, a flow of secondary air introduced from the other secondary air introducing conduit into the exhaust conduit is controlled by the control valve, and thereby an oxidization amount that CO and HC are oxidized by the secondary air at the second and the third catalyzer can be appropriately regulated.

The exhaust gas purification system for an internal-combustion engine according to a further preferred embodiment is an exhaust gas purifying system for an internal-combustion engine, including: an exhaust conduit for discharging exhaust gas from an internal-combustion engine; a first catalyzer provided in a midway part of the exhaust conduit for purifying the exhaust gas; a second catalyzer provided in a midway part of the exhaust conduit more downstream than the first catalyzer for purifying exhaust gas flowed out from the first catalyzer; a third catalyzer provided in a midway part of the exhaust conduit more downstream than the second catalyzer for purifying exhaust gas flowed out from the second catalyzer; a first secondary air introducing conduit provided in the exhaust conduit in a position between the first and the second catalyzers for introducing secondary air into the exhaust conduit; and a second secondary air introducing conduit provided in the exhaust conduit in a position between the second and the third catalyzers for introducing secondary air into the exhaust conduit.

In the present embodiment with such a construction, secondary air is introduced into the exhaust conduit in a position between the first and the second catalyzers through the first secondary air introducing conduit. Therefore, exhaust gas substances such as NOₓ contained in exhaust gas from the internal-combustion engine can be certainly reduced at the first catalyzer, and exhaust gas substances such as CO and HC contained in exhaust gas can be certainly reduced by the secondary air by use of the two catalyzers, which are the second and the third catalyzers. Also, secondary air is introduced into the exhaust conduit in a position between the second and the third catalyzers through the second secondary air introducing conduit. Therefore, exhaust gas substances such as CO and HC can be more certainly oxidized by the secondary air at the third catalyzer.

In one preferred aspect of the present embodiment, the first secondary air introducing conduit has a flow control valve for controlling a flow amount of secondary air introduced from the introducing conduit into the exhaust conduit. In the present embodiment with such a construction, a flow amount of secondary air introduced from the first secondary air introducing conduit into the exhaust conduit is controlled by the flow control valve, and thereby an oxidization amount that CO and HC are oxidized by the secondary air at the second and the third catalyzers can be appropriately regulated.

In the exhaust gas purifying system for an internal combustion engine according to the present teaching, secondary air is introduced into the exhaust conduit in a position between the second and the third catalyzers. Therefore, exhaust gas substances such as NOₓ contained in exhaust gas from the internal-combustion engine can be certainly reduced by use of the two catalyzers, which are the first and the second catalyzers, and CO and HC can be certainly oxidized by the secondary air at the third catalyzer formed with a material different from the first and the second catalyzers. Accordingly, exhaust gas substances such as NOₓ, CO, and HC contained in exhaust gas can be sufficiently purified by use of the three catalyzers.

The description above discloses, according to a preferred first aspect, an exhaust gas purifying system for an intemal-combustion engine, which comprises: an exhaust conduit for discharging exhaust gas from an internal-combustion engine; a first catalyzer provided in a midway part of the exhaust conduit for reducing at least NOₓ contained in the exhaust gas; a second catalyzer provided in a midway part of the exhaust conduit more downstream than the first catalyzer for reducing at least NOₓ in exhaust gas components contained in exhaust gas flowed out from the first catalyzer; a third catalyzer provided in a midway part of the exhaust conduit more downstream than the second catalyzer and formed with a material different from the first and the second catalyzers for oxidizing at least CO and HC in exhaust gas components contained in exhaust gas flowed out from the second catalyzer; and a secondary air introducing conduit provided in the exhaust conduit in a position between the second and the third catalyzers for introducing secondary air into the exhaust conduit.

Therein, the exhaust conduit may have another secondary air introducing conduit provided in a position between the first and the second catalyzers for introducing secondary air into the exhaust conduit (preferred second aspect).

Further, the other secondary air introducing conduit may have a flow control valve for controlling a flow of secondary air introduced from the introducing conduit into the exhaust conduit (preferred third aspect).

The description further discloses, according to a preferred fourth aspect, an exhaust gas purifying system for an internal-combustion engine, comprising: an exhaust conduit for discharging exhaust gas from an internal-combustion engine; a first catalyzer provided in a midway part of the exhaust conduit for purifying the exhaust gas; a second catalyzer provided in a midway part of the exhaust conduit more downstream than the first catalyzer for purifying exhaust gas flowed out from the first catalyzer; a third catalyzer provided in a midway part of the exhaust conduit more downstream than the second catalyzer for purifying exhaust gas flowed out from the second catalyzer; a first secondary air introducing conduit provided in the exhaust conduit in a position between the first and the second catalyzers for introducing secondary air into the exhaust conduit; and a second secondary air introducing conduit provided in the exhaust conduit in a position between the second and the third catalyzers for introducing secondary air into the exhaust conduit.

Therein, the first secondary air introducing conduit may have a flow control valve for controlling a flow amount of secondary air introduced from the introducing conduit into the exhaust conduit (preferred fifth aspect).

The description further discloses, in order to provide an exhaust gas purifying system for an internal-combustion engine, in which both reduction of NOₓ and oxidization of CO and HC contained in exhaust gas can be effectively made by use of three catalyzers, an embodiment including a first catalyzer 30 is disposed in a part more upstream than a second catalyzer 40. Thereby, secondary air flowing upstream from a secondary air introducing conduit 60 in an exhaust conduit 20 can be blocked at the second catalyzer 40. As a result, NOₓ can be sufficiently reduced at the first catalyzer 30 in addition to reduction of NOₓ at the second catalyzer 40. Further, a third catalyzer 50 is disposed in a part more downstream than the second catalyzer 40. CO and HC are oxidized at the third catalyzer 50.

## Claims

1. Exhaust gas purifying system for an internal-combustion engine, comprising:
an exhaust conduit (20) connectable to an exhaust port of the internal-combustion
engine for discharging exhaust gas;
a reduction catalyzer separated into a first reduction catalyzer (30) provided in a midway part of the exhaust conduit (20) for purifying the exhaust gas and a second reduction catalyzer (40,70,100) provided in a midway part of the exhaust conduit (20) more downstream than the first catalyzer (30) for purifying exhaust gas flowed out from the first catalyzer (30);
a third catalyzer (50) provided in a midway part of the exhaust conduit more downstream than the second catalyzer (40,70,100) for purifying exhaust gas flowed out from the second catalyzer;
a secondary air introducing conduit (60,80,110,190) provided in the exhaust conduit (20) in a position between the second and the third catalyzers (40,70,100,50) for introducing secondary air into the exhaust conduit (20), wherein said first catalyzer (30) is a preheating catalyzer for quickly activating the second and third catalyzers (40,70,700,50).

2. Exhaust gas purifying system according to claim 1, wherein a further secondary air introducing conduit (160,200) is provided in the exhaust conduit (20) in a position between the first and the second catalyzers (30,40) for introducing secondary air into the exhaust conduit (20).

3. Exhaust gas purifying system according to claim 2, wherein the secondary air introducing conduit (160,200) provided in a position between the first and second catalyzers (30,40) has a flow control valve (170,220) for controlling a flow of secondary air introduced from the introducing conduit (160,200) into the exhaust conduit (20).

4. Exhaust gas purifying system according to one of the claims 1 to 3, wherein the first catalyzer (30) provided in a midway part of the exhaust conduit is configured for reducing at least NOₓ contained in the exhaust gas, and wherein the second catalyzer (40,70,100,50) provided in a midway part of the exhaust conduit more downstream than the first catalyzer (30) is configured for reducing at least NOₓ in exhaust gas components contained in exhaust gas flowed out from the first catalyzer (30).

5. Exhaust gas purifying system according to claim 4, wherein the third catalyzer provided (50) in a midway part of the exhaust conduit more downstream than the second catalyzer is formed with a material different from the first and the second catalyzers (30,40,70,100,50) and is configured for oxidizing at least CO and HC in exhaust gas components contained in exhaust gas flowed out from the second catalyzer (40,70,100,50).

## Patentansprüche

1. Abgasreinigungssystem für eine Brennkraftmaschine, aufweisend:
einen Abgasleitung (20), verbindbar mit einer Abgasöffnung der Brennkraftmaschine zum Abgeben von Abgas;
einen Reduktionskatalysator, getrennt in einen ersten Reduktionskatalysator (30), vorgesehen in einem mittleren Teil der Abgasleitung (20) zum Reinigen des Abgases, und einen zweiten Reduktionskatalysator (40, 70, 100), vorgesehen in einem mittleren Teil der Abgasleitung (20), weiter stromab als der erste Katalysator 30) zum Reinigen des Abgases, ausgeströmt aus dem ersten Katalysator (30); einen dritten Katalysator (50), vorgesehen in einem mittleren Teil des Abgasleitung (20), weiter stromab als der zweite Katalysator (40, 70, 100) zum Reinigen des Abgases, ausgeströmt aus dem zweiten Katalysator;
eine Nebenluft- Einleitungsleitung (60, 80, 110, 190), vorgesehen in die Abgasleitung (20) an einer Position zwischen dem zweiten und dem dritten Katalysator (40, 70, 100, 50), zum Einleiten von Nebenluft in die Abgasleitung (20), wobei der erste Katalysator (30) ein Vorwärm- Katalysator zum schnellen Aktivieren des zweiten und dritten Katalysators (40, 70, 100, 50) ist.

2. Abgasreinigungssystem nach Anspruch 1, wobei eine weitere zweite Nebenluft-Einlassleitung (160, 200) in die Abgasleitung (20) an einer Position zwischen dem ersten und dem zweiten Katalysator (30, 40) zum Einleiten von Nebenluft in die Abgasreinigungsleitung (20) vorgesehen ist.

3. Abgasreinigungssystem nach Anspruch 2, wobei die zweite Nebenluft- Einlassleitung (160, 200), vorgesehen an einer Position zwischen dem ersten und dem zweiten Katalysator (30, 40), ein Strömungssteuerventil (170, 220) hat zum Steuern einer Strömung von Nebenluft, eingeleitet von der Einlassleitung (160, 200) in die Abgasleitung (20).

4. Abgasreinigungssystem nach einem der Ansprüche 1 bis 3, wobei der erste Katalysator (30), vorgesehen in einem mittleren Teil der Abgasleitung, konfiguriert ist, zumindest NOₓ, enthalten in dem Abgas, zu reduzieren und wobei der zweite Katalysator (40, 70, 100, 50), vorgesehen in einem mittleren Teil der Abgasleitung weiter stromab als der erste Katalysator (30), konfiguriert ist, zumindest NOₓ in den Abgaskomponenten, die in dem Abgas, ausgeströmt aus dem ersten Katalysator, enthalten sind, zu reduzieren.

5. Abgasreinigungssystem nach Anspruch 4, wobei der dritte Katalysator (50), vorgesehen in einem mittleren Teil der Abgasleitung weiter stromab als der zweite Katalysator, aus einem Material, das von demjenigen des ersten und zweiten Katalysators (40, 70, 100, 50) verschieden ist, gebildet ist und konfiguriert ist, zumindest CO und HC in den Abgaskomponenten zu oxidieren, die in dem Abgas, ausgeströmt aus dem zweiten Katalysator (40, 70, 100, 50), enthalten sind.

## Revendications

1. Système d'épuration de gaz d'échappement pour un moteur à combustion interne, comprenant :
un conduit d'échappement (20) pouvant être raccordé à un orifice d'échappement du moteur à combustion interne pour décharger un gaz d'échappement ;
un catalyseur réducteur séparé en un premier catalyseur réducteur (30) prévu dans une partie à mi-chemin du conduit d'échappement (20) pour épurer le gaz d'échappement et un deuxième catalyseur réducteur (40, 70, 100) prévu dans une partie à mi-chemin du conduit d'échappement (20) plus en aval que le premier catalyseur (30) pour épurer un gaz d'échappement sortant du premier catalyseur (30) ;
un troisième catalyseur (50) prévu dans une partie à mi-chemin du conduit d'échappement plus en aval que le deuxième catalyseur (40, 70, 100) pour épurer un gaz d'échappement sortant du deuxième catalyseur ;
un conduit d'introduction d'air secondaire (60, 80, 110, 190) prévu dans le conduit d'échappement (20) dans une position entre les deuxième et troisième catalyseurs (40, 70, 100, 50) pour introduire de l'air secondaire dans le conduit d'échappement (20), dans lequel ledit premier catalyseur (30) est un catalyseur de préchauffage pour activer rapidement les deuxième et troisième catalyseurs (40, 70, 700, 50).

2. Système d'épuration de gaz d'échappement selon la revendication 1, dans lequel un conduit d'introduction d'air secondaire supplémentaire (160, 200) est prévu dans le conduit d'échappement (20) dans une position entre les premier et deuxième catalyseurs (30, 40) pour introduire de l'air secondaire dans le conduit d'échappement (20).

3. Système d'épuration de gaz d'échappement selon la revendication 2, dans lequel le conduit d'introduction d'air secondaire (160, 200) prévu dans une position entre les premier et deuxième catalyseurs (30, 40) possède une soupape de régulation d'écoulement (170, 220) pour réguler un écoulement d'air secondaire introduit à partir du conduit d'introduction (160, 200) dans le conduit d'échappement (20).

4. Système d'épuration de gaz d'échappement selon une des revendications 1 à 3, dans lequel le premier catalyseur (30) prévu dans une partie à mi-chemin du conduit d'échappement est configuré pour réduire au moins les NOₓ contenus dans le gaz d'échappement, et dans lequel le deuxième catalyseur (40, 70, 100, 50) prévu dans une partie à mi-chemin du conduit d'échappement plus en aval que le premier catalyseur (30) est configuré pour réduire au moins les NOₓ dans des composants de gaz d'échappement contenus dans le gaz d'échappement sortant du premier catalyseur (30).

5. Système d'épuration de gaz d'échappement selon la revendication 4, dans lequel le troisième catalyseur (50) prévu dans une partie à mi-chemin du conduit d'échappement plus en aval que le deuxième catalyseur est formé avec un matériau différent des premier et deuxième catalyseurs (30, 40, 70, 100, 50) et est configuré pour oxyder au moins le CO et l'HC dans des composants de gaz d'échappement contenus dans le gaz d'échappement sortant du deuxième catalyseur (40, 70, 100, 50).
